# EUROPEAN PATENT SPECIFICATION

(11) **EP 1 336 064 B1**
(45) Date of publication and mention of the grant of the patent: **26.01.2005**
(21) Application number: 00989026.0
(22) Date of filing: 23.11.2000
(51) Int. Cl.: F16L 59/02, B29C 44/50

(54) **Thermal insulation metallocene polyethylene foam and manufacturing method therefor**
Metallocen-Polyethylenschaumstoff für Wärmedämmung und Herstellungsverfahren
Mousse en polyéthylène métallocène pour isolation thermique et procédé pour sa fabrication

(43) Date of publication of application: 20.08.2003
(73) Proprietor: Thermaflex International Holding B.V., 5145 NS Waalwijk (NL)
(72) Inventor: VAN DER VEN, Emanuel, c/o Thermaflex Int. Hold. BV, NL-5140 AM Waaldwijk (NL); BOUT, Henrik W., c/o Thermaflex Int. Hold. BV, NL-5140 AM Waalwijk (NL); DE BELL, Humphrey R., c/o Thermaflex Int. Hold. BV, NL-5140 AM Waalwijk (NL); BAARS, Gerrit-Jan, c/o Thermaflex Int. Hold. BV, NL-5140 AM Waalwijk (NL)
(74) Representative: De Hoop, Eric
(86) International application number: PCT/NL2000/000859
(87) International publication number: WO 2002/042679

(56) References cited:
- WO-A-00/55243
- US-A- 4 844 762
- US-A- 5 904 970
- US-A- 6 054 078
- PATENT ABSTRACTS OF JAPAN vol. 1999, no. 08, 30 June 1999 (1999-06-30) & JP 11 060781 A (SAKAI KAGAKU KOGYO KK), 5 March 1999 (1999-03-05)

## Description

The present invention relates to a pipe insulation made from a polyolefin thermal insulation foam, to a polyolefin thermal insulation foam and to a method for preparing a physically foamed polyolefin thermal insulation foam and to the foam prepared therewith.

For the thermal insulation of pipes such as hot water conduits, high and low pressure steam pipes, and pipes for split-air conditioning, district heating, solar energy exploitation and the process industry, hollow profiles having a wall of synthetic foam are used on a large scale. Said profiles will hereinafter be referred to as pipe insulation.

The most important types of pipe insulation that are currently commercially available are PE pipe insulation and rubber pipe insulation.

PE pipe insulation consists of foam that composed of thermoplasts and has a density of approximately 35 kg/m³. This type of foam is usually produced using physical blowing agents (for instance butane) and is not crosslinked. This type of foam has good product properties such as insulation value, fire behaviour and water absorption capacity. The foam can be recycled excellently. The foam is prepared in a single process, i.e. the production takes place on one step. A drawback of PE pipe insulation material is that it is less flexible than rubber pipe insulation as a result of which it is difficult to apply around thin and twisting pipes. As a result the material is not suitable for some uses such as for instance air conditioning and cooling.

Rubber pipe insulation consists of foam that is composed of elastomers and has a density of about 60 kg/m³. This type of foam is often produced using chemical blowing agents (for instance azo-compounds) and usually is crosslin ked. Rubber pipe insulation is a very flexible material that is easy to apply. This type of foam has good product properties such as insulation value and fire behaviour. A drawback of rubber pipe insulation is that it cannot be recycled and that it is relatively heavy (that means that a lot of material is necessary for insulation). The water absorption capacity is good as such, but in case of damage to its skin the material behaves like a sponge and said good property is lost. Another drawback of rubber pipe insulation is that this material is produced using a method comprising three steps: kneading, extruding and foaming. In combination with the high density this makes the cost price of rubber pipe insulation higher than that of PE pipe insulation.

US 6,054,078 discloses a process for manufacturing an integrally bonded, multilayered foamed product comprising first extruding, using a physical blowing agent, a foamed core member, cooling said core member, heating the surface of the core member to a temperature approaching the melting point of the core member and applying a molten plastic coating to the heated surface of the core member to peripherally surround the core member. The core member may comprise a metallocene polymer, and additives such as a flame extinguisher and a cell stablizer.

There is a need for an ultra flexible pipe insulation that is easy to apply around twisting pipes, has excellent thermal insulation capacity, is made from foam that can be recycled well and has a low density of preferably 35 kg/m³ or less.

It was found that that need can be met by a pipe insulation consisting of one layer of a polyolefin foam that only comprises metallocene polyethylene as polyolefin.

The present invention provides a polyolefin thermal insulation foam which is made by extruding, using a physical blowing agent, a foam composition comprising a metallocene polyethylene, a flame extinguisher and a cell stabilizer, characterised in that said composition comprises 77-92 % by weight of metallocene polyethylene, 5-10 % by weight of flame extinguisher, and 3-8 % by weight of cell stabilizer.

In one embodiment the polyolefin thermal insulation foam further comprises a stabilizer for the flame extinguisher and/or catalyst for the flame extinguisher, the total amount of said flame extinguisher, said catalyst for the flame extinguisher and said stabilizer for the flame extinguisher being 5-18% by weight. In another embodiment the polyolefin thermal insulation foam further comprises 0-5 % by weight of usual foam additives.

The foam preferably has a density of less than 35 kg/m³, particularly less than 30 kg/m³.

The degree of flexibility of the foam can be indicated by the indentation strength according to DIN 53577. Preferably it is 0.020 N/mm² or less at 10% indentation, 0.035 N/mm² at 20% indentation, and 0.100 N/mm² at 50% indentation.

Due to the high flexibility of the foam, pipe insulation made from the foam according to the invention is easily applied around twisting pipes. Because the foam is prepared using physical blowing agents and is not chemically crosslinked, it can be recycled easily.

The term "metallocene polyethylene" refers to polyethylenes that are prepared by polymerising ethylene in the presence of a metallocene catalyst. For preparing and processing metallocene polyethylene reference is made to for instance Kurt W. Schwogger, An outlook for metallocene and single site catalyst technology into the 21^{st} century, Antec 98, Processing Metallocene Polyolefines, Conference Proceedings, October 1999, Rapra Technology, and Proceedings of 2^{nd} International Congress on Metallocene Polymers, Scotland Conference Proceedings, March 1998.

A suitable polyolefin for the preparation of polyolefin foam according to the invention is for instance a polyolefin elastomer having a density of 880-920 kg/m³, a melt flow index (MFI) of between 0.5 and 4.5 g/10 min at 190°C, a DSC-melting peak of between 98 and 107°C and a tensile strength (ASTM D-683M-90, 50 mm/min) of between 20 and 60 MPa.

The invention further provides a method for preparing a physically foamed polyolefin thermal insulation foam by extruding, using a physical blowing agent, a composition comprising a metallocene polyethylene, a flame extinguisher and a cell stabilizer, said method comprising the steps of a) mixing 77-92% by weight of metallocene polyethylene and 5-10% by weight of a flame extinguisher in an extruder to obtain a mixture, b) adding 3-8% by weight of a cell stabilizer to said mixture, c) melting said mixture in the melting zones of the extruder adjusted to temperatures of 180 to 240°C, at a pressure increasing from 1 bar up to 400 bar, d) injecting said physical blowing agent at an injection temperature of 140 to 180°C and an injection pressure of 200 to 300 bar, e) cooling the molten mixture in cooling zones of the extruder adjusted to temperatures of 60 to 110°C, and f) extruding the mixture through an extrusion nozzle adjusted to a temperature of 85 to 110°C, so that the mixture expands to a foam at a pressure of 1 atm.

In one embodiment a stabilizer for the flame extinguisher and/or a catalyst for said flame extinguisher are mixed with the mixture in step a) of the method of the invention, the total amount of said flame extinguisher, said catalyst for the flame extinguisher and said stabilizer for the flame extinguisher being 5-18% by weight. In a further embodiment 0-5% by weight of usual foam additives are mixed with the mixture in step a) of the method of the invention.

Any flame extinguisher normally used in the art can be used as flame extinguisher provided that it does not affect the properties of the foam. Examples of flame extinguishers for use in the invention include halogen containing flame extinguishers. Halogen containing flame extinguishers are usually used in combination with a stabilizer such as pentaerythritol and a catalyst such as for instance antimony trioxide. The mixing ratio between antimony trioxide and the halogen containing component may for instance be about 1:3 or 1:2. It is also possible to use various flame extinguishers. The total added quantity of flame extinguisher including optional stabilizer and catalyst is approximately 5-18 % by weight, based on the total quantity of polymer and additives. When the flame extinguisher is used in a quantity of less than 5 % by weight, the fire resistant properties of the foam may be insufficient. The use of a quantity of flame extinguisher of more than 10% may result in affecting the properties of the foam (flexibility).

The cell stabilizer prevents the blowing agent from escaping from the polymer melt immediately after injection, as a result of which no foam is formed. Any cell stabilizer normally used in the art can be used as cell stabilizer, provided that it does not affect the properties of the foam. Examples of suitable cell stabilizers include cell stabilizers of the type stearic acid amide, glycol monostearate and fatty acids of glycine. It is also possible to use more than one cell stabilizer. The total added quantity of cell stabilizer is about 3-8 % by weight, based on the total quantity of polymer and additives. The cell stabilizer is suitably added by means of for instance a side feeder, to the mixture of polymer, flame extinguisher and optional other additives before the mixture is melted on.

In addition to the flame extinguisher and the cell stabilizers the usual additives for polyolefin foams can be added to the foam. Non-limiting examples of them include colorants, pigments, fillers, nucleating agents and stabilizers.

As blowing agent any substance can be used that is liquid at high pressure, particularly the pressure prevailing in the extruder used for carrying out the method, but which substance evaporates at lower pressure. Non-limiting examples of the blowing agent comprise alkanes having 3 to 8 carbon atoms, such as for instance propane, butane, isobutane and hexane. The blowing agent is brought to a temperature of 140 to 180°C and a pressure of 200 to 300 bar and continuously injected into the melted mixture in the extruder.

It is important that when mixing the metallocene polyethylene, the flame extinguisher and the optional additives, the mixture is melted well in the extruder, i.e. the polymer is brought in the liquid phase resulting in such a viscoelastic behaviour that polymer and additives are mixed well into each other and that in a later stage also the physical blowing agent is incorporated well into the polymer mixture. When for the preparation of the polyolefin foam according to the invention a mixer is used in which only low shearing forces are exerted on the mixture, it is advantageous to choose such a temperature that the viscoelastic behaviour of the polymer and additives is almost equal. A parameter to express viscous behaviour is the melt flow index (MFI) (the throughput of material at a certain temperature and pressure). With the present method the MFI-values of polymers and additives are suitably between 0.5 and 4.5 g/10 minutes at 190°C.

The method of the invention can suitably be carried out on a single screw extruder having an L/D between 30 and 60, provided with mixing parts and a static mixer having for instance a throughput of 50 to 150 kg/h.

The pipe insulation material according to the invention suitably has a wall thickness of 3 to 30 mm at an inner diameter of 4-130.

### Example

A single screw extruder of the type described above was provided with an open space of 5-100 mm², after which the number of revolutions was adjusted at 15-40 rpm.

A mixture of polymer and additives (flame extinguisher, cell stabilizers) was added in the above-mentioned mixing ratios. The melting zones of the extruder were adjusted at 200-240°C, the cooling zones were adjusted at 60-95°C. Blowing agent (propellant) was injected at an injection pressure of 200-250 bar and a mass temperature of 80 to 105°C in a quantity of 20-25 l/h (as liquid). The pressure in the extruder decreased to approximately 10-30 bar at the nozzle of the extruder, after which the mixture expanded to a foam having a density of 20 to 25 kg/m³ in the form of pipe insulation having an internal diameter of 18-28 mm and a wall thickness of 20-30 mm.

The pipe insulation material according to the invention had the following properties.

| **Properties** | |
|---|---|
| Density (kg/m³, volumetrically determined) | 15-30 |
| Cross-section cells (mm) | 0.30-0.50 |
| Insulation value (λ₄₀, W/m.K) | 0.035-0.040 |
| Flexibility¹) (indentation strength in N/mm²⁾ | |
| 10% indentation | 0.012-0.020 |
| 20% indentation | 0.018-0.026 |
| 50% indentation | 0.076-0.096 |
| Rebound after 70% indentation, t = 0 hour (internal method) | 90-95 |
| Rebound after 70% indentation, t = 1 hour (internal method) | 95-100 |

| | |
|---|---|
| ¹) The flexibility was measured according to DIN 53577. | |

## Claims

1. A polyolefin thermal insulation foam which is made by extruding, using a physical blowing agent, a foam composition comprising a metallocene polyethylene, a flame extinguisher and a cell stabilizer, **characterised in that** said composition comprises 77-92 % by weight of metallocene polyethylene, 5-10 % by weight of flame extinguisher, and 3-8 % by weight of cell stabilizer.

2. A polyolefin thermal insulation foam according to claim 1, further comprising a stabilizer for the flame extinguisher and/or catalyst for the flame extinguisher, the total amount of the flame extinguisher, said catalyst for the flame extinguisher and said stabilizer for the flame extinguisher being 5-18% by weight.

3. A polyolefin thermal insulation foam according to claim 1 or 2 further comprising 0-5 % by weight of other usual foam additives.

4. A polyolefin thermal insulation foam according any one of claims 1 to 3 having a density of no more than 35 kg/m³.

5. A polyolefin thermal insulation foam according to any one of claims 1 to 3 having a density of no more than 30 kg/m³.

6. A polyolefin thermal insulation foam according to any one of claims 1 to 5, having an indentation strength measured according to DIN 53577 of:
≤ 0.020 N/mm² at 10% indentation,
≤ 0.035 N/mm² at 20% indentation, and
≤ 0.100 N/mm² at 50% indentation.

7. A polyolefin thermal insulation foam according to any one of claims 1-6 having the form of a pipe insulation.

8. A method for preparing a physically foamed polyolefin thermal insulation foam by extruding, using a physical blowing agent, a composition comprising a metallocene polymer, a flame extinguisher and a cell stabilizer, said method comprising the steps of a) mixing 77-92% by weight of metallocene polyethylene and 5-10% by weight of a flame extinguisher in an extruder to obtain a mixture, b) adding 3-8% by weight of a cell stabilizer to said mixture, c) melting said mixture in the melting zones of the extruder adjusted to temperatures of 180 to 240°C, at a pressure increasing from 1 bar up to 400 bar, d) injecting said physical blowing agent at an injection temperature of 140 to 180°C and an injection pressure of 200 to 300 bar, e) cooling the molten mixture in cooling zones of the extruder adjusted to temperatures of 60 to 110°C, and f) extruding the mixture through an extrusion nozzle adjusted to a temperature of 85 to 110°C, so that the mixture expands to a foam at a pressure of 1 atm.

9. A method for preparing a physically foamed polyolefin thermal insulation foam according to claim 8 wherein a stabilizer for the flame extinguisher and/or a catalyst for the flame extinguisher are mixed with the mixture in step a), the total amount of the flame extinguisher, said stabilizer for the flame extinguisher and said catalyst for the flame extinguisher being 5-18% by weight.

10. A method for preparing a physically foamed polyolefin thermal insulation foam according to claim 8 or 9 wherein 0-5% by weight usual foam additives are mixed with the mixture in step a).

11. A method for preparing a physically foamed polyolefin thermal insulation foam according to any one of claims 8 - 10 wherein the mixture expands to a foam in the form of a pipe insulation.

## Patentansprüche

1. Polyolefin-Wärmeisolierungsschaum, der durch Extrudieren einer Schaumzusammensetzung unter Verwendung eines physikalischen Treibmittels hergestellt wird, wobei die Schaumzusammensetzung ein Metallocen-Polyethylen, ein Flammenlöschmittel und einen Zellstabilisator aufweist, **dadurch gekennzeichnet**, dass-die Zusammensetzung 77-92 Gew.-% Metallocen-Polyethylen, 5-10 Gew.-% Flammenlöschmittel und 3-8 Gew.-% Zellstabilisator aufweist.

2. Polyolefin-Wärmeisolierungsschaum nach Anspruch 1, der weiterhin einen Stabilisator für das Flammenlöschmittel und/oder einen Katalysator für das Flammenlöschmittel aufweist, wobei die Gesamtmenge des Flammenlöschmittels, des Katalysators für das Flammenlöschmittel und des Stabilisators für das Flammenlöschmittel 5-18 Gew.-% beträgt.

3. Polyolefin-Wärmeisolierungsschaum nach Anspruch 1 oder 2, der weiterhin 0-5 Gew.-% anderer üblicher Schaumzusätze aufweist.

4. Polyolefin-Wärmeisolierungsschaum nach einem der Ansprüche 1 bis 3, der eine Dichte von nicht mehr als 35 kg/m³ hat.

5. Polyolefin-Wärmeisolierungsschaum nach einem der Ansprüche 1 bis 3, der eine Dichte von nicht mehr als 30 kg/m³ hat.

6. Polyolefin-Wärmeisolierungsschaum nach einem der Ansprüche 1 bis 5, der einen Eindruckwiderstand, gemessen nach DIN 53577, von
≤ 0,020 N/mm² bei 10 %-igem Eindruck,
≤ 0,035 N/mm² bei 20 %-igem Eindruck und
≤ 0,100 N/mm² bei 50 %-igem Eindruck hat.

7. Polyolefin-Wärmeisolierungsschaum nach einem der Ansprüche 1 bis 6, der die Form einer Rohrisolierung hat.

8. Verfahren zum Herstellen eines physikalisch geschäumten Polyolefin-Wärmeisolierungsschaums durch Extrudieren einer Zusammensetzung unter Verwendung eines physikalischen Treibmittels, wobei die Zusammensetzung ein Metallocen-Polymer, ein Flammenlöschmittel und einen Zellstabilsator aufweist, wobei dieses Verfahren die Schritte umfasst: a) Mischen von 77-92 Gew.-% Metallocen-Polyethylen und 5-10 Gew.-% Flammenlöschmittel in einem Extruder, um eine Mischung zu erhalten, b) Zufügen von 3-8 Gew.-% eines Zellstabilisators zu dieser Mischung, c) Schmelzen der Mischung in den Schmelzbereichen des Extruders, die auf Temperaturen von 180 bis 240 °C eingestellt sind, bei einem Druck, der von 1 bar bis auf 400 bar ansteigt, d) Einspritzen des physikalischen Treibmittels bei einer Einspritztemperatur von 140 bis 180 °C und einem Einspritzdruck von 200 bis 300 bar, e) Kühlen der geschmolzenen Mischung in Kühlbereichen des Extruders, die auf Temperaturen von 60 bis 110 °C eingestellt sind, und f) Extrudieren der Mischung durch eine Extrusionsdüse, die auf eine Temperatur von 85 bis 110 °C eingestellt ist, so dass die Mischung sich mit einem Druck von 1 atm zu einem Schaum ausdehnt.

9. Verfahren zum Herstellen eines physikalisch geschäumten Polyolefin-Wärmeisolierungsschaums nach Anspruch 8, bei dem ein Stabilisator für das Flammenlöschmittel und/oder ein Katalysator für das Flammenlöschmittel mit der Mischung in Schritt a) gemischt werden, wobei die Gesamtmenge des Flammenlöschmittels, des Stabilisators für das Flammenlöschmittel und des Katalysators für das Flammenlöschmittel 5-18 Gew.-% beträgt.

10. Verfahren zum Herstellen eines physikalisch geschäumten Polyolefin-Wärmeisolierungsschaums nach Anspruch 8 oder 9, bei dem 0-5 Gew.-% übliche Schaumzusätze mit der Mischung in Schritt a) gemischt werden.

11. Verfahren zum Herstellen eines physikalisch geschäumten Polyolefin-Wärmeisolierungsschaums nach einem der Ansprüche 8 bis 10, bei dem sich die Mischung zu einem Schaum in Form einer Rohrisolierung ausdehnt.

## Revendications

1. Mousse calorifugeage à base de polyoléfine qui est produite par extrusion, au moyen d'un agent d'expansion, une composition de mousse comprenant un polyéthylène métallocène, un agent extincteur de flamme et un stabilisateur de cellule, **caractérisée en ce que** ladite composition comprend de 77 à 92 % en poids d'un polyéthylène métallocène, de 5 à 10 % en poids d'un agent extincteur de flamme, et de 3 à 8 % en poids d'un stabilisateur de cellule.

2. Mousse calorifugeage à base de polyoléfine selon la revendication 1, comprenant en outre un stabilisateur pour l'agent extincteur de flamme et/ou un catalyseur pour l'agent extincteur de flamme, la quantité totale de l'agent extincteur, dudit catalyseur pour l'agent extincteur de flamme et dudit stabilisateur pour l'agent extincteur de flamme étant de 5 à 18 % en poids.

3. Mousse calorifugeage à base de polyoléfine selon la revendication 1 ou 2 comprenant en outre de 0 à 5 % en poids d'autres additifs habituels de mousse.

4. Mousse calorifugeage à base de polyoléfine selon l'une quelconque des revendications 1 à 3 ayant une densité d'au plus 35 kg/m³.

5. Mousse calorifugeage à base de polyoléfine selon l'une quelconque des revendications 1 à 3 ayant une densité d'au plus 30 kg/m³.

6. Mousse calorifugeage à base de polyoléfine selon l'une quelconque des revendications 1 à 5, ayant une résistante à la contrainte mesurée selon la norme DIN 53577 de :
≤ 0,020 N/mm² à 10 % de compression
≤ 0,035 N/mm² à 20 % de compression
≤ 0,100 N/mm² à 50 % de compression.

7. Mousse calorifugeage à base de polyoléfine selon l'une quelconque des revendications 1 à 6 ayant la forme d'un isolant en tube.

8. Procédé pour préparer une mousse calorifugeage à base de polyoléfine expansée physiquement par extrusion, au moyen d'un agent d'expansion physique, une composition comprenant un polymère métallocène, un agent extincteur de flamme et un stabilisateur de cellule, ledit procédé comprenant les étapes de a) mélange de 77 à 92 % en poids d'un polyéthylène métallocène et de 5 à 10 % en poids d'un agent extincteur de flamme dans une extrudeuse pour obtenir un mélange, b) ajout de 3 à 8 % en poids d'un stabilisateur de cellule audit mélange, c) fusion dudit mélange dans les zones de fusion de l'extrudeuse ajustée aux températures de 180 à 240°C, sous une pression qui augmente de 1 bar à 400 bar, d) injection dudit agent d'expansion physique à une température d'injection de 140 à 180°C et une pression d'injection de 200 à 300 bar, e) refroidissement du mélange fondu dans les zones de refroidissement de l'extrudeuse ajustée à des températures de 60 à 110°C, et f) extrusion du mélange à travers un buse d'extrusion ajustée à une température de 85 à 110°C, de sorte que le mélange s'étend sous une mousse à une pression de 1 atm.

9. Procédé pour préparer une mousse calorifugeage à base de polyoléfine expansée physiquement selon la revendication 8 dans lequel un stabilisateur pour l'agent extincteur de flamme et/ou un catalyseur pour l'agent extincteur sont mélangés au mélange de l'étape a), la quantité totale de l'agent extincteur, ledit stabilisateur pour l'agent extincteur de flamme et ledit catalyseur pour l'agent extincteur de flamme étant de 5 à 18 % en poids.

10. Procédé pour préparer une mousse calorifugeage à base de polyoléfine expansée physiquement selon la revendication 8 ou 9 dans lequel de 0 à 5 % en poids d'additifs habituels de mousse sont mélangés au mélange de l'étape a).

11. Procédé pour préparer une mousse calorifugeage à base de polyoléfine expansée physiquement selon l'une quelconque des revendications 8 à 10 dans lequel le mélange s'étend en une mousse ayant la forme d'un isolant en tube.
